# FASCICULE DE BREVET EUROPEEN

(11) **EP 1 285 582 B1**
(45) Date de publication et mention de la délivrance du brevet: **18.02.2004**
(21) Numéro de dépôt: 02291991.4
(22) Date de dépôt: 07.08.2002
(51) Int. Cl.: A22B 5/04

(54) **Installation et procédé pour prélever et collecter le sang d'animaux**
Anlage und Verfahren zur Abnahme und Gewinning von Tierblut
Installation and method for drawing and collecting animal blood

(30) Priorité: 13.08.2001 FR 0110837
(43) Date de publication de la demande: 26.02.2003
(73) Titulaire: Bernard S.A., 56500 Moreac (FR); Delaunoy, Jean-Pierre, 59690 Vieux Conde (FR)
(72) Inventeur: Delaunoy, Jean-Pierre, 7532 Tournai (BE)
(74) Mandataire: Maillet, Alain

(56) Documents cités:
- GB-A- 2 342 844
- US-A- 5 318 079
- DATABASE WPI Week 199703 Derwent Publications Ltd., London, GB; AN 1997-021798 XP002180285 & BR 9 405 317 A (DIMENSTEIN), 3 décembre 1996 (1996-12-03)

## Description

L'invention concerne un dispositif et un procédé pour prélever et collecter le sang d'animaux de boucherie, notamment de porcs. Elle trouve application notamment dans les installations d'abattage devant obéir à des conditions hygiéniques strictes.

Dans les abattoirs industriels modernes, les préoccupations de contrôle sanitaire et de maîtrise des coûts de production ont conduit à rationaliser la chaîne d'abattage et notamment l'étape de saignée des animaux, indispensable à l'obtention d'une viande de qualité. Par ailleurs, le sang animal est un sous-produit présentant des débouchés importants dans l'industrie alimentaire humaine et animale. Il importe donc de pouvoir le prélever et le collecter dans les meilleures conditions hygiéniques possibles.

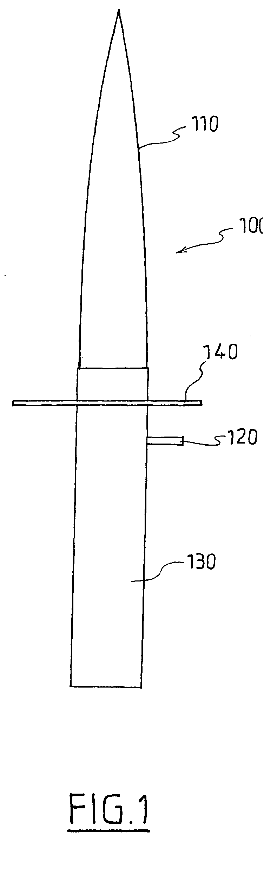

Selon une technique d'abattage connue, les porcs sont d'abord anesthésiés au CO₂ ou par électro-narcose puis suspendus par leurs pattes arrières à un carrousel de saignée. Un couteau à manche creux ou trocart est enfoncé dans la crosse aortique de l'animal. Ce trocart est relié à un conteneur au moyen d'un tuyau souple, un conteneur étant généralement relié à plusieurs trocarts. Un exemple de trocart couramment utilisé pour saigner les animaux de boucherie est schématiquement représenté en Fig. 1. Ce dispositif 100 comporte une lame à double tranchant 110 soudée à un manche creux 130. La base du manche creux est susceptible d'être reliée par un tuyau souple (non représenté) à un conteneur. Le manche est pourvu à sa partie supérieure d'une tubulure 120 d'arrivée de produit anti-coagulant qui empêche le sang de coaguler à l'intérieur du manche et du tuyau souple.

Le sang prélevé au moyen du trocart est récupéré par écoulement gravitaire dans un conteneur. Afin d'accélérer la saignée, le conteneur est maintenu en dépression au moyen d'une pompe aspirante. Le conteneur est prévu pour avoir une capacité suffisante pour pouvoir récupérer successivement ou simultanément le sang d'une dizaine d'animaux. Après un certain délai, les conteneurs sont vidangés dans une cuve de stockage.

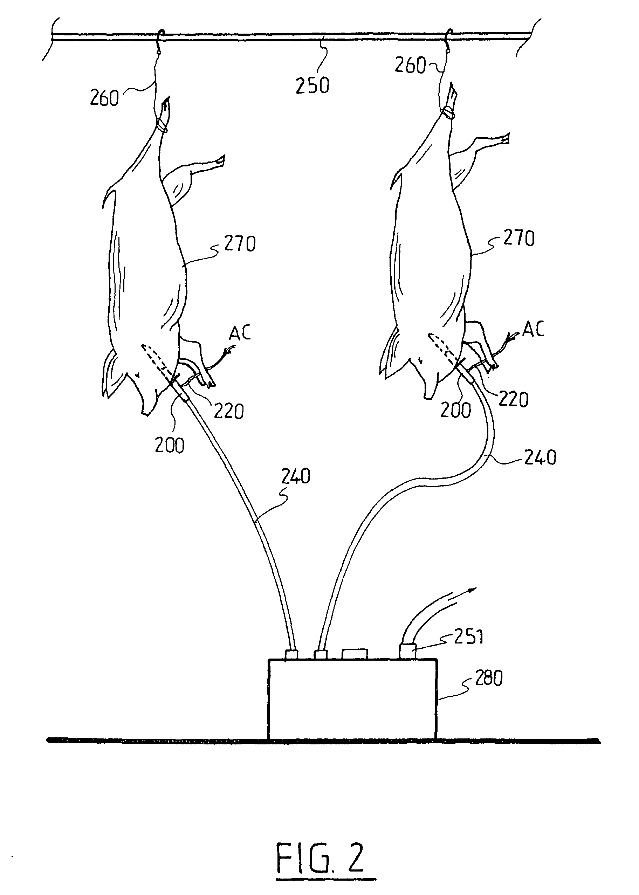

Un poste de saignée utilisant ce procédé connu est illustré en Fig. 2. Le poste comprend un convoyeur 250 auquel sont suspendus les animaux grâce à des élingues 260. Les trocarts 200 sont représentés enfoncés dans les corps 270 d'animaux abattus. Ces trocarts sont reliés à un conteneur 280 par des tuyaux souples 240. Les tubulures d'arrivée 220 sont reliées à un réservoir de produit anti-coagulant (non représenté). Le conteneur 280 est relié au moyen d'une prise 251 à une pompe aspirante (non représentée).

Après la saignée, les animaux sont lavés, échaudés et épilés puis dépecés et éviscérés. Les carcasses et les viscères sont contrôlées par un poste de contrôle vétérinaire. Lorsque le contrôle vétérinaire conclut à un animal malade ou impropre à la consommation, la carcasse est saisie. Le poste de contrôle vétérinaire en avertit le poste de saignée de manière à ce que le sang de l'animal malade soit également saisi. En pratique le sang collecté reste stocké dans les conteneurs pendant le temps de transit dans la chaîne d'abattage, de manière à ce que le conteneur ayant collecté le sang de l'animal malade soit encore disponible au moment où l'ordre de saisie arrive. Son contenu ne peut alors être vidangé dans la cuve de stockage et doit être détruit. Ainsi, le sang des animaux sains collecté dans le conteneur ayant recueilli le sang de l'animal saisi est perdu. Qui plus est, si plusieurs conteneurs ont servi à collecter le sang de l'animal saisi, c'est l'ensemble du sang collecté dans ces conteneurs qui doit être détruit. Or, la destruction du sang est onéreuse car elle doit être accompagnée de mesures anti-pollution drastiques. Enfin, si la carcasse d'un animal ne passe pas au contrôle vétérinaire pour une raison quelconque, par exemple parce qu'elle s'est détachée de son élingue à une certaine étape de traitement de la chaîne, le sang de cet animal sera transféré dans la cuve de stockage. Ce n'est que lorsque la perte de l'animal sera découverte que des mesures pourront être prises, ce qui peut intervenir bien après que le sang de l'animal ait été transféré dans la cuve de stockage. Si cet animal s'avère malade, c'est le contenu entier de la cuve de stockage qui est pollué. On doit alors faire face à une situation délicate : soit l'on accepte le défaut hygiénique de milliers de litres de sang contenu dans la cuve, soit on supporte le coût de leur destruction.

Le problème à la base de l'invention est de proposer une installation d'abattoir permettant de s'affranchir des inconvénients précités et notamment de limiter au strict minimum la quantité de sang à détruire.

A cette fin, l'installation selon l'invention est définie par une installation d'abattoir pour prélever et collecter le sang d'animaux, notamment de porcs, comprenant des moyens d'acheminement permettant d'acheminer lesdits animaux à une pluralité de postes de travail, l'installation comprenant une enceinte de stockage réfrigérée et un premier convoyeur adapté à convoyer des poches de sang prélevé sur les animaux, d'un premier poste de travail, dit poste de retour, à ladite enceinte, ledit convoyeur se prolongeant ensuite dans ladite enceinte jusqu'à un poste d'aiguillage l'aiguillage d'une poche étant déterminé en fonction du résultat d'un premier contrôle vétérinaire relatif à l'animal sur lequel le sang a été prélevé.

Le temps de convoyage desdites poches entre le poste de retour et le poste d'aiguillage est avantageusement choisi supérieur au temps au bout duquel ledit premier contrôle vétérinaire est achevé.

De préférence, le poste d'aiguillage est adapté à aiguiller automatiquement lesdites poches, l'aiguillage d'une poche étant déterminé en fonction d'une information ou d'une absence d'information relative audit contrôle vétérinaire.

Selon un premier mode de fonctionnement, le poste d'aiguillage laisse une poche poursuivre son convoyage par ledit premier convoyeur si le premier contrôle vétérinaire lui a transmis une information de validation hygiénique et la dirige vers un rack de stockage dans le cas inverse.

Selon un second mode de fonctionnement, le poste d'aiguillage laisse une poche poursuivre son convoyage par ledit premier convoyeur s'il n'a pas reçu une information de risque hygiénique et la dirige vers un rack de stockage dans le cas inverse.

L'installation peut comprendre en outre un dispositif de vidange comprenant une cuve de vidange, des moyens de guidage pour guider les poches lors de leur convoyage, par le premier convoyeur, au-dessus de la cuve de vidange vers une scie circulaire, ladite scie circulaire étant disposée de manière à percer lesdites poches au-dessus de la cuve de vidange. La cuve de vidange est avantageusement surmontée d'un capot de protection présentant une fente dans la direction de convoyage de manière à laisser passer lesdites poches.

De préférence, l'installation comprend un second convoyeur adapté à convoyer des moyens de prélèvement comprenant chacun un trocart et une poche de prélèvement, à partir d'un poste de préparation des trocarts où lesdites poches sont fixées aux trocarts, jusqu'à un second poste de travail, dit poste de saignée où les trocarts sont enfoncés dans les corps des animaux.

De même, l'installation peut comprendre un troisième convoyeur adapté à convoyer les trocarts à partir dudit poste de retour à un dispositif de nettoyage et de stérilisation desdits trocarts puis audit poste de préparation des trocarts.

L'installation peut encore comprendre un quatrième convoyeur adapté à convoyer des dispositifs d'identification ou de marquage des poches et des animaux, à un troisième poste de travail, dit poste de marquage, situé en amont du poste de retour, dans le sens d'acheminement des animaux. Les moyens d'identification comprennent de préférence un transpondeur et une frappe à tatouer.

Afin de permettre la saignée, les moyens d'acheminement sont de préférence adaptés à acheminer les animaux en position couchée.

L'invention est également définie par un procédé pour prélever et collecter le sang d'animaux dans un abattoir, selon lequel on prélève le sang de chaque animal au moyen d'un trocart auquel est fixée une poche de prélèvement, une poche correspondant à un et un seul animal. Au terme de la saignée, les poches contenant le sang prélevé sont détachées des trocarts, convoyées dans une enceinte de stockage réfrigérée, puis aiguillées par un poste d'aiguillage, l'aiguillage d'une poche étant déterminé en fonction du résultat d'un premier contrôle vétérinaire relatif à l'animal sur lequel le sang a été prélevé.

Selon un premier mode de fonctionnement, si le premier contrôle vétérinaire est négatif, une information de validation hygiénique est transmise au poste d'aiguillage, une poche pour laquelle ladite information est reçue étant convoyée jusqu'à un poste de vidange où le contenu de la poche est recueilli dans une cuve de vidange puis acheminé à une cuve de stockage et une poche pour laquelle ladite information n'a pas été reçue étant placée en attente jusqu'à ce qu'un second contrôle vétérinaire soit effectué.

Selon un second mode de fonctionnement, si le premier contrôle vétérinaire est positif ou un animal est manquant, une information de risque hygiénique est transmise au poste d'aiguillage, une poche pour laquelle ladite information n'a pas été reçue étant convoyée jusqu'à un poste de vidange où le contenu de la poche est recueilli dans une cuve de vidange puis acheminé à une cuve de stockage et une poche pour laquelle ladite information a été reçue étant placée en attente jusqu'à ce qu'un second contrôle vétérinaire soit effectué.

Dans les deux cas, si le second contrôle vétérinaire est négatif, la poche mise en attente relative à l'animal finalement déclaré sain est convoyée jusqu'au poste de vidange et que, dans le cas contraire, ladite poche de sang est saisie pour être détruite.

Au terme de la saignée, les trocarts sont retirés des animaux, convoyés à un poste de lavage et de stérilisation puis recyclés pour nouvelle utilisation.

De préférence, chaque animal est identifié par un code d'identification d'animal et que chaque poche est identifiée par un code d'identification de poche, chaque code d'identification de poche étant associé à un code d'identification d'animal et à un seul.

Les caractéristiques de l'invention mentionnées ci-dessus, ainsi que d'autres, apparaîtront plus clairement à la lecture de la description faite en relation avec les dessins joints, parmi lesquels :
La Fig. 1 représente schématiquement un trocart utilisé pour le prélèvement du sang d'animaux de boucherie, tel que connu de l'état de la technique ;
La Fig. 2 représente schématiquement un poste de saignée dans une chaîne d'abattage, tel que connu de l'état de la technique;
La Fig. 3a représente schématiquement une première partie de l'installation d'abattoir selon l'invention ;
La Fig. 3b représente schématiquement une seconde partie de l'installation d'abattoir selon l'invention ;
La Fig. 4a représente une vue de dessus du dispositif de vidange des poches utile à la réalisation de l'invention ;
La Fig. 4b représente une première coupe du même dispositif ;
La Fig. 4c représente une seconde coupe du même dispositif.

Une première idée générale à la base de l'invention est d'effectuer un prélèvement de sang animal par animal dans des poches individuelles, comme décrit dans la demande de brevet FR 01 02365 déposée le 20.2.01 au nom des demandeurs. Une seconde idée générale à la base de l'invention est de prévoir une installation permettant d'effectuer une vidange sélective des poches de sang prélevé, de sorte que seul le sang d'un animal sain puisse rejoindre la cuve de stockage.

Il a été proposé dans la demande de brevet précitée un dispositif de prélevèment et de collecte de sang constitué d'un trocart et d'une poche en matière plastique pouvant être fixée de manière étanche à ce dernier au moyen d'un système de fixation rapide. Dans un premier temps, on fixe la poche au manche du trocart au moyen du système de fixation rapide. Le trocart est ensuite enfoncé dans la crosse aortique de l'animal et le sang s'écoule à travers le manche du trocart dans la poche de prélèvement. A la fin de la saignée, la poche est détachée du trocart en déverrouillant le système de fixation.

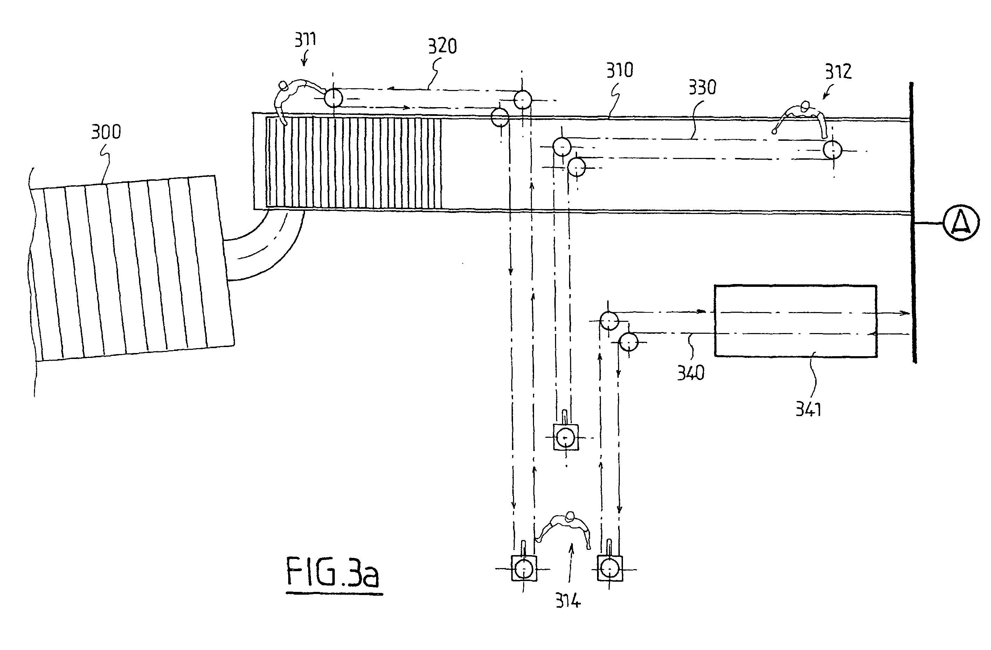

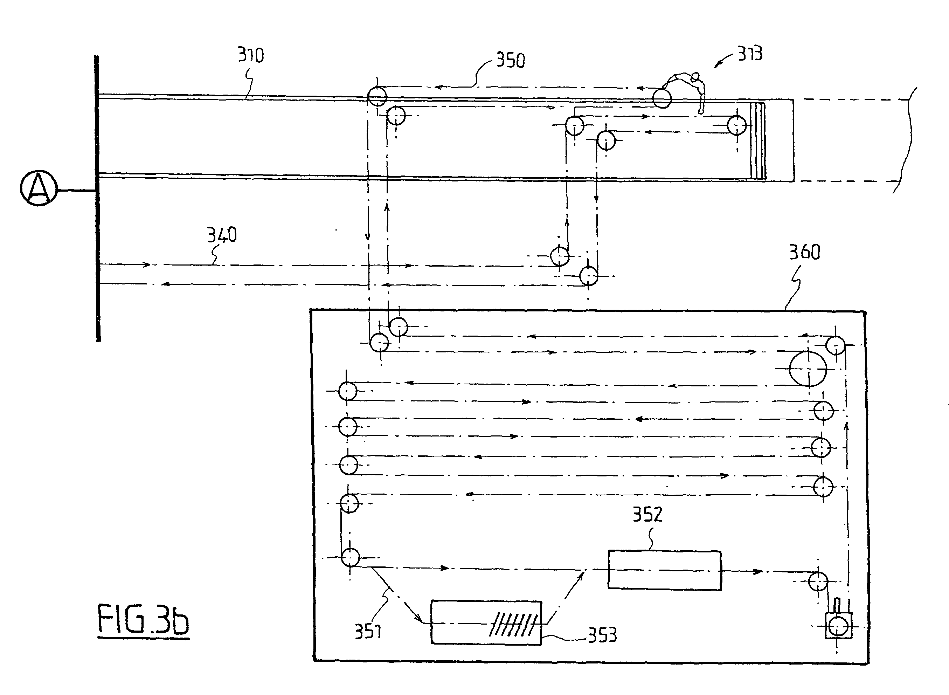

L'installation de l'invention vise à traiter les poches de sang prélevé de manière industrielle. Une représentation schématique de l'installation est donnée en Figs. 3a et 3b.

Après avoir été anesthésiés, les animaux rejoignent par une rampe d'accès 300, des moyens d'acheminement 310 constitués, par exemple, par un tapis mécanique ou une succession de rouleaux montés fous. Les animaux arrivent au poste de saignée 331 en position couchée. Un opérateur saisit du convoyeur 320 un ensemble trocart-poche et enfonce le trocart dans la crosse aortique de l'animal.

L'animal est ensuite acheminé par les moyens d'acheminement 310 à un second poste 312 dit de marquage. A ce poste, l'animal et la poche sont pourvus de codes d'identification, de sorte qu'une poche corresponde à un et un seul animal. Selon une première variante, un code d'identification de poche est apposé sur la poche au moyen d'un tampon encreur et le code d'identification d'animal est apposé sur l'animal au moyen d'un tatouage. Selon une seconde variante, la poche peut être identifiée au moyen d'une étiquette à code barre, un transpondeur et de manière générale par des moyens d'identification portant un code d'identification de poche. De même, l'animal peut être identifié par des moyens d'identification portant un code d'identification d'animal, par exemple un transpondeur injecté dans la carcasse. Si, pour une raison quelconque, il n'a pas été possible de prélever le sang d'un animal, ce dernier pourra faire l'objet d'une identification particulière, par exemple d'un tatouage supplémentaire. Selon une variante préférentielle de réalisation, l'identification d'un animal et de la poche correspondante est réalisée par des dispositifs d'identification acheminés au poste de marquage par un convoyeur.

A titre d'exemple, les dispositifs d'identification peuvent comprendre une frappe à tatouer et un transpondeur. L'opérateur chargé du marquage tatoue alors l'animal au moyen de la frappe. D'autre part, un capteur, situé au poste de marquage, lit le code émis par le transpondeur et le transmet à une imprimante qui imprime un code directement sur la poche ou sur une étiquette qui sera apposée sur la poche. Quel que soit le mode de réalisation retenu, le même code peut être avantageusement utilisé pour la poche et l'animal.

Après le poste de marquage, l'animal arrive à un poste de retour 313 des poches et trocarts. A ce poste, un opérateur détache tout d'abord les poches en déverrouillant les moyens de fixation rapide et les place sur un convoyeur de poches 350. Après les avoir retiré des corps des animaux, l'opérateur place également les trocarts sur un convoyeur de trocarts 340.

Après avoir été acheminés en position couchée devant les postes précités par les moyens d'acheminement 310, les animaux sont ensuite hissés par des élingues pour être convoyés à des postes de lavage, échaudage, épilage, etc., de manière classique. Au terme du traitement, les viscères et les carcasses sont soumises à un contrôle visuel puis à un premier contrôle vétérinaire. Ce premier contrôle peut soit conclure directement que l'animal est sain, soit déclarer que l'animal présente des risques hygiéniques, auquel cas la carcasse est dirigée vers un poste de contrôle vétérinaire plus approfondi, dit poste d'observation. Au terme de ce second contrôle, l'animal peut être soit finalement déclaré sain (éventuellement au prix d'une saisie partielle) soit saisi par les services vétérinaires.

Selon un premier mode de fonctionnement, une information de validation est transmise à un poste d'aiguillage 351 (décrit plus loin) si le premier ou, le cas échéant, le second contrôle est négatif. Autrement dit, l'information transmise à ce poste valide l'hygiène du sang de l'animal.

Selon un second mode de fonctionnement, une information de risque hygiénique est transmise au poste d'aiguillage si l'animal est mis en observation ou s'il est manquant dans la chaine d'abattage. Si, au bout du compte, l'animal est déclaré sain, une information de validation est alors transmise au poste d'aiguillage.

Comme on l'a vu, une pluralité de convoyeurs 320, 330, 340, 350 amènent et, le cas échéant, ramènent les moyens matériels nécessaires aux différents postes de travail le long des moyens d'acheminement.

Le convoyeur 320 transporte d'un poste de manipulation 314 au poste de saignée les moyens de prélèvement, ceux-ci comprenant chacun un trocart et une poche associée et retourne à vide au poste de manipulation. Avantageusement, un opérateur fixe au moyen du système de fixation rapide une poche à chaque trocart puis accroche l'ensemble au convoyeur 320. Selon une variante, une dose d'anticoagulant est préalablement injectée, à travers le manche creux du trocart, dans la poche. A cette fin un doseur automatique composé de deux vannes identiques montées en série sur une canalisation et actionnées par des commandes inversées peut être utilisé. Le volume de la canalisation, délimité par les deux vannes, définit la dose à injecter.

Le convoyeur 330 transporte les dispositifs d'identification en boucle fermée. La longueur du convoyeur est prévue suffisamment longue pour permettre une durée d'autonomie acceptable. Les dispositifs d'identification peuvent comprendre, comme on l'a vu, des frappes à tatouer, des tampons encreurs, des transpondeurs, des étiquettes à codes barre etc.

Le convoyeur 340 transporte les trocarts du poste de retour 313 au poste de manipulation 314 et revient à vide au poste de retour. A ce poste, un opérateur retire le trocart de l'animal et l'accroche au convoyeur 340. Les trocarts sont ensuite convoyés au travers d'un dispositif de prélavage, de lavage puis de stérilisation 341 et arrivent stérilisés au poste de manipulation 314 pour être réutilisés.

Le convoyeur 350 transporte les poches de sang prélevé du poste de retour 313 à une enceinte de stockage réfrigérée 360, se prolonge à l'intérieur de cette enceinte, avantageusement sous forme de méandres jusqu'à un poste d'aiguillage 351. La longueur du convoyeur entre le poste de retour et le poste d'aiguillage est déterminée de manière à ce que le temps de convoyage de la poche jusqu'au poste d'aiguillage soit supérieur au temps de transit de l'animal dans la chaîne d'abattage jusque et inclus le premier contrôle vétérinaire. Ainsi, lorsqu'une poche arrive au niveau du poste d'aiguillage, le premier contrôle vétérinaire a déjà été effectué. Il faut alors distinguer selon le mode de fonctionnement utilisé.

Selon le premier mode, si le premier contrôle vétérinaire est négatif, c'est-à-dire si l'animal est déclaré sain, le poste d'aiguillage reçoit à temps le code d'identification de l'animal sain et en déduit le code d'identification de la poche correspondante. Lorsqu'une poche se présente au poste d'aiguillage, soit son code d'identification est reconnu, auquel cas elle pourra poursuivre son parcours sur le convoyeur, soit il n'est pas reconnu et dans ce cas la poche sera aiguillée, de manière automatique ou manuelle vers un rack de stockage temporaire 353. Une poche dont le code n'est pas reconnu peut correspondre à un animal mis en observation pour le second contrôle vétérinaire ou bien encore manquant dans la chaîne d'abattage. Si ultérieurement, une information de validation est transmise au poste d'aiguillage (animal finalement déclaré sain ou retrouvé et déclaré sain), la poche en attente dans le rack sera renvoyée dans le circuit normal.

Selon le second mode de fonctionnement, si le contrôle vétérinaire est négatif, ou si l'animal est détecté manquant dans la chaîne d'abattage, le code d'identification de l'animal à risque hygiénique (en observation ou manquant ) est transmis à temps au poste d'aiguillage et le code d'identification de la poche en est déduit. Lorsque la poche se présente au poste d'aiguillage, soit son code d'identification n'est pas reconnu, auquel cas elle pourra poursuivre son parcours sur le convoyeur, soit il est reconnu et dans ce cas la poche sera aiguillée, de manière automatique ou manuelle vers un rack de stockage temporaire 353. Si ultérieurement, une information de validation est transmise au poste d'aiguillage (animal finalement déclaré sain ou retrouvé et déclaré sain), la poche en attente dans le rack sera renvoyée dans le circuit normal, c'est-à-dire le convoyeur 350.

Les poches restées dans le rack de stockage sont saisies en fin de lot d'abattage par les services compétents. En revanche, les poches relatives aux animaux sains sont convoyées par le convoyeur 350 vers un dispositif de vidange 352 décrit plus loin. Après vidange, si elles sont à emploi unique, les poches sont détachées du convoyeur pour recyclage de la matière plastique dont elles sont constituées. Alternativement, si l'on utilise des poches réutilisables, elles seront lavées et désinfectées pour réemploi. Le convoyeur revient ensuite à vide au poste de retour 313.

Le poste d'aiguillage pourra comprendre un dispositif de lecture de codes barre et de manière plus générale un dispositif de lecture quelconque permettant de lire le code d'identification de la poche. Les poches de sang suspendues au convoyeur 350 passent une à une devant le dispositif de lecture. Il faut distinguer alors les deux modes de fonctionnement.

Selon le premier mode, si le code d'identification de la poche, lu par le dispositif de lecture, correspond au code d'un animal ayant été identifié comme sain, la poche poursuit son parcours vers le poste de vidange. A défaut, elle est automatiquement aiguillée vers le rack de stockage temporaire.

Selon le second mode de fonctionnement, si le code d'identification de la poche correspond au code d'un animal mis en observation ou manquant, elle est dirigée vers le rack de stockage temporaire. A défaut, elle poursuit son parcours vers le poste de vidange.

Il est clair que d'autres postes correspondant à divers traitements du sang prélevé peuvent être prévus le long du convoyeur 350. Dans tous les cas, l'aiguillage des poches peut être assuré automatiquement à partir de leurs codes d'identification.

En outre, des mesures visant à éviter la coagulation du sang dans les poches, hors de l'enceinte réfrigérée 360, peuvent être prévues. Par exemple, la paroi intérieure des poches peut être revêtue d'un agent complexant du calcium comme, par exemple, l'acide éthylènediaminetétraacétique, un citrate, un oxalate, un fluoride, un phosphate, un lactate, une triglycine, un alginate. De manière générale, on pourra employer un agent chélatant ou séquestrant du calcium. Comme la réaction de coagulation du sang nécessite la présence d'ions calcium, cette précaution permet de ralentir la formation du caillot. Alternativement ou de surcroît, l'on peut injecter un agent anti-coagulant à l'intérieur de la poche avant le prélèvement. Dans ce cas, cette injection est réalisée au poste 314, comme vu précédemment.

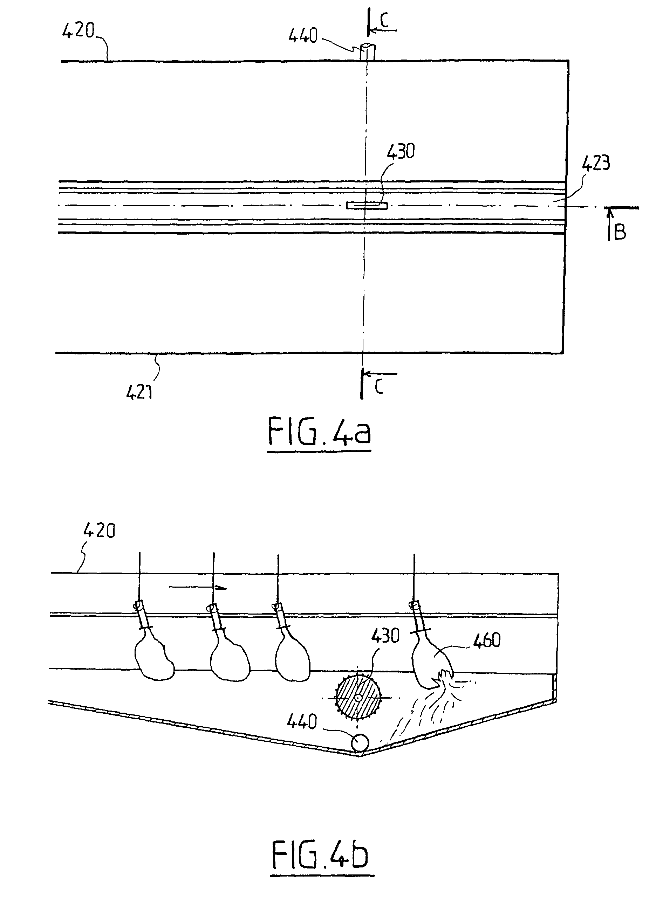

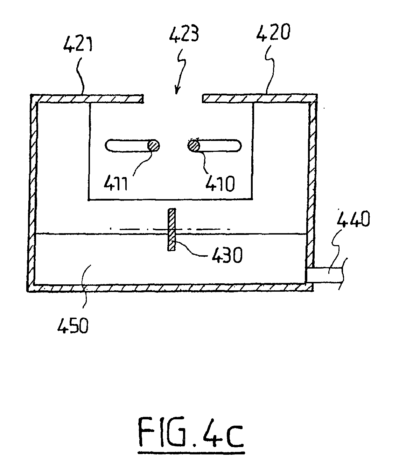

Les Figs 4a, 4b, 4c représentent un exemple de dispositif de vidange des poches respectivement en vue de dessus, selon la coupe BB et selon la coupe CC. Le dispositif de vidange comprend une cuve de vidange 450 surmontée d'un capot de protection constitué de deux ailes 420 et 421 rabattues vers le centre de la cuve à leurs parties supérieures et dont les rebords délimitent une fente centrale 423 destinée à laisser passer les poches 460 transportées par le convoyeur 350. Les poches sont guidées au moyen des rails 410 et 411 jusqu'à une scie circulaire 430 qui les fend à leur passage. Le sang contenu dans la poche se déverse alors dans la cuve de vidange 450. La cuve de vidange est pourvue à sa base d'un tuyau de vidange 440 permettant de transférer le sang à une cuve de stockage (non représentée). Les poches ainsi fendues ne peuvent donner lieu qu'à un recyclage de la matière plastique.

Bien entendu, d'autres dispositifs de vidange peuvent être envisagés. Par exemple, les poches de prélèvement pourront être équipées de valves ou encore de moyens de préhension permettant leur retournement. Le dispositif pourra encore siphoner ou aspirer le sang contenu dans les poches. Dans ces différentes situations, les poches pourront être recyclées après nettoyage et désinfection appropriée.

L'installation décrite permet un prélèvement et une collecte de sang dans d'excellentes conditions hygiéniques tout en minimisant la quantité de sang saisi. En outre, l'identification des poches et des animaux garantit une parfaite traçabilité du sang prélevé.

## Revendications

1. Installation d'abattoir pour prélever et collecter le sang d'animaux, notamment de porcs, comprenant des moyens d'acheminement (310) permettant d'acheminer lesdits animaux à une pluralité de postes de travail (311, 312, 313), **caractérisée en ce qu'**elle comprend une enceinte de stockage réfrigérée (360) et un premier convoyeur (350) adapté à convoyer des poches de sang prélevé sur les animaux, d'un premier poste de travail, dit poste de retour, à ladite enceinte, ledit convoyeur se prolongeant ensuite dans ladite enceinte jusqu'à un poste d'aiguillage (351), l'aiguillage d'une poche étant déterminé en fonction du résultat d'un premier contrôle vétérinaire relatif à l'animal sur lequel le sang a été prélevé.

2. Installation d'abattoir selon la revendication 1, **caractérisée en ce que** le temps de convoyage desdites poches entre le poste de retour et le poste d'aiguillage est choisi supérieur au temps au bout duquel ledit premier contrôle vétérinaire est achevé.

3. Installation d'abattoir selon la revendication 1 ou 2, **caractérisée en ce que** le poste d'aiguillage est adapté à aiguiller automatiquement lesdites poches, l'aiguillage d'une poche étant déterminé en fonction d'une information ou d'une absence d'information relative audit contrôle vétérinaire.

4. Installation d'abattoir selon l'une des revendications précédentes, **caractérisée en ce que** le poste d'aiguillage laisse une poche poursuivre son convoyage par ledit premier convoyeur si le premier contrôle vétérinaire lui a transmis une information de validation hygiénique et la dirige vers un rack (353) de stockage dans le cas inverse.

5. Installation d'abattoir selon l'une des revendications 1 à 3, **caractérisée en ce que** le poste d'aiguillage laisse une poche poursuivre son convoyage par ledit premier convoyeur s'il n'a pas reçu une information de risque hygiénique et la dirige vers un rack (353) de stockage dans le cas inverse.

6. Installation d'abattoir selon l'une des revendications précédentes, **caractérisée en ce qu'**elle comprend un dispositif de vidange (352) comprenant une cuve de vidange (450), des moyens de guidage (410,411) pour guider les poches lors de leur convoyage, par le premier convoyeur, au dessus de la cuve de vidange vers une scie circulaire (430), ladite scie circulaire étant disposée de manière à percer lesdites poches au dessus de la cuve de vidange.

7. Installation d'abattoir selon la revendication 6, **caractérisée en ce que** la cuve de vidange est surmontée d'un capot de protection (420,421) présentant une fente (423) dans la direction de convoyage de manière à laisser passer lesdites poches.

8. Installation d'abattoir selon l'une des revendications précédentes, **caractérisée en ce qu'**elle comprend un second convoyeur (320) adapté à convoyer des moyens de prélèvement comprenant chacun un trocart et une poche de prélèvement, à partir d'un poste de préparation des trocarts (314) où lesdites poches sont fixées aux trocarts, jusqu'à un second poste de travail (311), dit poste de saignée où les trocarts sont enfoncés dans les corps des animaux.

9. Installation d'abattoir selon la revendication 8, **caractérisée en ce qu'**elle comprend un troisième convoyeur (340) adapté à convoyer les trocarts à partir dudit poste de retour (313) à un dispositif (341) de nettoyage et de stérilisation desdits trocarts puis audit poste de préparation des trocarts.

10. Installation d'abattoir selon l'une des revendications précédentes, **caractérisée en ce qu'**elle comprend un quatrième convoyeur (330) adapté à convoyer des dispositifs d'identification ou de marquage des poches et des animaux, à un troisième poste de travail (312), dit poste de marquage, situé en amont du poste de retour, dans le sens d'acheminement des animaux.

11. Installation d'abattoir selon la revendication 10, **caractérisée en ce que** les moyens d'identification comprennent un transpondeur et une frappe à tatouer.

12. Installation d'abattoir selon l'une des revendications précédentes, **caractérisée en ce que** les moyens d'acheminement sont adaptés à acheminer les animaux en position couchée.

13. Procédé pour prélever et collecter le sang d'animaux dans un abattoir, **caractérisé en ce que** l'on prélève le sang de chaque animal au moyen d'un trocart auquel est fixée une poche de prélèvement, une poche correspondant à un et un seul animal, et qu'au terme de la saignée, les poches contenant le sang prélevé sont détachées des trocarts, convoyées dans une enceinte de stockage réfrigérée, puis aiguillées par un poste d'aiguillage, l'aiguillage d'une poche étant déterminée en fonction du résultat d'un premier contrôle vétérinaire relatif à l'animal sur lequel le sang a été prélevé.

14. Procédé selon la revendication 13, **caractérisé en ce que**, si le premier contrôle vétérinaire est négatif, une information de validation hygiénique est transmise au poste d'aiguillage, une poche pour laquelle ladite information est reçue étant convoyée jusqu'à un poste de vidange, où le contenu de la poche est recueilli dans une cuve de vidange, puis acheminé à une cuve de stockage et une poche pour laquelle ladite information n'a pas été reçue étant placée en attente jusqu'à ce qu'un second contrôle vétérinaire soit effectué.

15. Procédé selon la revendication 13, **caractérisé en ce que**, si le premier contrôle vétérinaire est positif ou un animal est manquant, une information de risque hygiénique est transmise au poste d'aiguillage, une poche pour laquelle ladite information n'a pas été reçue étant convoyée jusqu'à un poste de vidange où le contenu de la poche est recueilli dans une cuve de vidange, puis acheminé à une cuve de stockage et une poche pour laquelle ladite information a été reçue étant placée en attente jusqu'à ce qu'un second contrôle vétérinaire soit effectué.

16. Procédé selon la revendication 14 ou 15, **caractérisé en ce que**, si le second contrôle vétérinaire est négatif, la poche mise en attente relative à l'animal finalement déclaré sain est convoyée jusqu'au poste de vidange et que, dans le cas contraire, ladite poche de sang est saisie pour être détruite.

17. Procédé selon l'une des revendications 13 à 16, **caractérisé en ce qu'**au terme de la saignée les trocarts sont retirés des animaux, convoyés à un poste de lavage et de stérilisation puis recyclés, pour une nouvelle utilisation.

18. Procédé selon l'une des revendications 13 à 17, **caractérisé en ce que** chaque animal est identifié par un code d'identification d'animal et que chaque poche est identifiée par un code d'identification de poche, chaque code d'identification de poche étant associé à un code d'identification d'animal et à un seul.

## Claims

1. Abattoir installation for drawing and collecting animal blood, in particular from pigs, comprising means of transportation (310) making it possible to transport said animals to a plurality of work stations (311, 312, 313), **characterized in that** it comprises a refrigerated storage enclosure (360) and a first conveyor (350) suitable for conveying bags of blood drawn from the animals, from a first work station, designated return station to said enclosure, said conveyor then being extended in said enclosure to a routing station (351), the routing of a bag being determined as a function of the result of a first veterinary check relating to the animal from which the blood has been drawn.

2. Abattoir installation according to claim 1, **characterized in that** the conveyance time of said bags between the return station and the routing station is chosen to be longer than the time at the end of which said first veterinary check is completed.

3. Abattoir installation according to claim 1 or 2, **characterized in that** the routing station is adapted for automatic routing of said bags, the routing of a bag being determined as a function of a message or absence of a message relating to said veterinary check.

4. Abattoir installation according to one of the preceding claims, **characterized in that** the routing station allows a bag to continue being conveyed by said first conveyor if the first veterinary check has transmitted to it a health validation message, and directs said bag towards a storage rack (353) in the opposite case .

5. Abattoir installation according to one of claims 1 to 3, **characterized in that** the routing station allows a bag to continue being conveyed by said first conveyor if it has not received a health risk message and directs it towards a storage rack (353) in the opposite case.

6. Abattoir installation according to one of the preceding claims, **characterized in that** it comprises a drainage device (352) comprising a drainage tank (450), guidance means (410, 411) for guiding the bags during their conveyance, by the first conveyor, over the drainage tank towards a circular saw (430), said circular saw being arranged in such a way as to pierce said bags above the drainage tank.

7. Abattoir installation according to claim 6, **characterized in that** the drainage tank is surmounted by a protective cover (420, 421) having a slot (423) in the conveyance direction, in order to allow said bags to pass.

8. Abattoir installation according to one of the preceding claims, **characterized in that** it comprises a second conveyor (320) suitable for conveying blood-drawing means each comprising a trocar and sampling bag from a trocar preparation station (314) where said bags are fixed to the trocars, to a second work station (311), designated bloodletting station, where the trocars are pushed into the bodies of the animals.

9. Abattoir installation according to claim 8, **characterized in that** it comprises a third conveyor (340) suitable for conveying the trocars from said return station (313) to a device (341) for cleaning and sterilizing said trocars then to said trocar preparation station.

10. Abattoir installation according to one of the preceding claims, **characterized in that** it comprises a fourth conveyor (330) suitable for conveying devices for identifying or marking the bags and the animals, to a third work station (312), said marking station being situated upstream of the return post, in the direction of transportation of the animals.

11. Abattoir installation according to claim 10, **characterized in that** the means of identification comprise a transponder and a tattooing hammer.

12. Abattoir installation according to one of the preceding claims, **characterized in that** the means of transportation are suitable for transporting the animals in a lying position.

13. Process for drawing and collecting animal blood in an abattoir, **characterized in that** blood is drawn from each animal by means of a trocar to which a sampling bag is fixed, one bag corresponding to one animal, and one only, and that at the end of the bloodletting, the bags containing the blood drawn are detached from the trocars, conveyed into a refrigerated storage enclosure, then routed by a routing station, the routing of the bag being determined as a function of the result of a first veterinary check relating to the animal from which the blood has been drawn.

14. Process according to claim 13, **characterized in that**, if the first veterinary check is negative, a health validation message is transmitted to the routing station, the bag for which said message is received being conveyed to the routing station, where the content of the bag is collected into a drainage tank, then transported to a storage tank and a bag for which said message has not been received being placed ready until a second veterinary check is carried out.

15. Process according to claim 13, **characterized in that**, if the first veterinary check is positive or an animal is missing, a health risk message is transmitted to the routing station, a bag for which said message has not been received being conveyed to a drainage station, where the content of the bag is collected into a drainage tank, then transported to a storage tank and the bag for which said message has been received being placed ready until a second veterinary check is carried out.

16. Process according to claim 14 or 15, **characterized in that**, if the second veterinary check is negative, the bag placed ready relating to the animal finally declared healthy is conveyed to the drainage station, and that, in the opposite case, said blood bag is taken to be destroyed.

17. Process according to one of claims 13 to 16, **characterized in that**, at the end of the bloodletting, the trocars are withdrawn from the animals, conveyed to a washing and sterilizing station, then recycled, for reuse.

18. Process according to one of claims 13 to 17, **characterized in that** each animal is identified by an animal identification code, and that each bag is identified by a bag identification code, each bag identification code being associated with one animal identification code and one only.

## Patentansprüche

1. Schlachteinrichtung zur Abnahme und zum Sammeln von Tierblut, insbesondere von Schweinen, umfassend Förderungsmittel (310) zum Fördern der Tiere zu einer Mehrzahl von Arbeitsstationen (311, 312, 313), **dadurch gekennzeichnet, dass** sie einen abgeschlossenen Raum zur Tiefkühllagerung (360) und eine erste Fördereinrichtung (350) zum Fördern von Beuteln mit von den Tieren abgenommenem Blut von einer ersten Arbeitsstation, d.h. einer Rücklauf-Station, zum abgeschlossenen Raum umfasst, wobei sich die Fördereinrichtung anschließend in den abgeschlossenen Raum bis zu einer Abzweigstation (351) erstreckt, wobei die Verteilung eines Beutels durch das Ergebnis einer ersten Veterinär-Kontrolle des Tieres, von dem das Blut abgenommen wurde, bestimmt wird.

2. Schlachteinrichtung nach Anspruch 1, **dadurch gekennzeichnet, dass** die Beförderungszeit der Beutel zwischen der Rücklauf-Station und der Abzweigstation höher gewählt wird als die Zeit, an deren Ende die erste Veterinär-Kontrolle abgeschlossen ist.

3. Schlachteinrichtung nach Anspruch 1 oder 2, **dadurch gekennzeichnet, dass** die Abzweigstation so eingerichtet ist, dass die Beutel automatisch verteilt werden, wobei die Verteilung eines Beutels durch eine Information oder die Abwesenheit einer Information in Bezug auf die Veterinär-Kontrolle bestimmt wird.

4. Schlachteinrichtung nach einem der vorhergehenden Ansprüche, **dadurch gekennzeichnet, dass** die Abzweigstation die Förderung eines Beutels durch die erste Fördereinrichtung bewirkt, wenn die erste Veterinär-Kontrolle ihm eine hygienische Tauglichkeits-Information übermittelt hat, und dirigiert ihn im umgekehrten Fall zu einem Lagergestell (353).

5. Schlachteinrichtung nach einem der Ansprüche 1 bis 3, **dadurch gekennzeichnet, dass** die Abzweigstation die Förderung eines Beutels durch die erste Fördereinrichtung bewirkt, wenn er keine Information eines hygienischen Risikos empfangen hat, und dirigiert ihn im umgekehrten Fall zu einem Lagergestell (353).

6. Schlachteinrichtung nach einem der vorhergehenden Ansprüche, **dadurch gekennzeichnet, dass** sie eine Entleerungsvorrichtung (352) mit einem Entleerungsbehälter (450), Führungsmittel (410, 411) zum Führen der Beutel während ihrer Beförderung durch die erste Fördereinrichtung über den Entleerungsbehälter auf eine Kreissäge (430) zu umfasst, wobei die Kreissäge so angeordnet ist, dass sie die Beutel über dem Entleerungsbehälter einsticht.

7. Schlachteinrichtung nach Anspruch 6, **dadurch gekennzeichnet, dass** der Entleerungsbehälter mit einer Schutzabdeckung (420, 421) versehen ist, die in Förderrichtung einen Schlitz (423) zum Durchlass der Beutel aufweist.

8. Schlachteinrichtung nach einem der vorhergehenden Ansprüche, **dadurch gekennzeichnet, dass** sie eine zweite Fördereinrichtung (320) zum Fördern von Abnahmevorrichtungen umfasst, welche jeweils einen Bauchstecher und einen Beutel zur Aufnahme besitzen, von einer Station zum Präparieren der Bauchstecher (314), wo die Beutel an den Bauchstechern befestigt werden, bis zu einer zweiten Arbeitsstation (311), d.h. einer Blutabnahmestation, wo die Bauchstecher in die Körper der Tiere eingestochen werden.

9. Schlachteinrichtung nach Anspruch 8, **dadurch gekennzeichnet, dass** sie eine dritte Fördereinrichtung (340) zum Fördern der Bauchstecher von der Rücklaufstation (313) zu einer Vorrichtung (341) zur Reinigung und Sterilisation der Bauchstecher, und danach zur Station zur Präparation der Bauchstecher umfasst.

10. Schlachteinrichtung nach einem der vorhergehenden Ansprüche, **dadurch gekennzeichnet, dass** sie eine vierte Fördereinrichtung (330) zum Fördern der Identifikations- oder Markierungs-Vorrichtungen der Beutel und der Tiere zu einer dritten Arbeitsstation (312), d. h. Markierungs-Station umfasst, die in Förderrichtung der Tiere oberhalb der Rücklaufstation liegt.

11. Schlachteinrichtung nach Anspruch 10, **dadurch gekennzeichnet, dass** die Identifikationsmittel einen Transponder und eine Schlageinrichtung zum Tätowieren umfassen.

12. Schlachteinrichtung nach einem der vorhergehenden Ansprüche, **dadurch gekennzeichnet, dass** die Fördermittel so eingerichtet sind, dass die Tiere in liegender Position befördert werden.

13. Verfahren zur Abnahme und Sammeln von Tierblut in einem Schlachthof, **dadurch gekennzeichnet, dass** das Blut von jedem Tier mittels eines Bauchstechers abgenommen wird, an dem ein Aufnahmebeutel befestigt ist, wobei ein Beutel jeweils einem einzigen Tier zugeordnet ist, und dass die das abgenommene Blut enthaltenden Beutel am Ende der Blutabnahme von den Bauchstechern abgelöst, in einen abgeschlossenen Raum zur Tiefkühllagerung gefördert, und dann von einer Abzweigstation verteilt werden, wobei die Verteilung eines Beutels durch das Ergebnis einer ersten Veterinär-Kontrolle des Tieres bestimmt wird, dem das Blut abgenommen worden ist.

14. Verfahren nach Anspruch 13, **dadurch gekennzeichnet, dass**, wenn die erste Veterinär-Kontrolle negativ ist, eine hygienische Tauglichkeitserklärung an die Abzweigstation übertragen wird, worauf ein Beutel, für den diese Information empfangen worden ist, zu einer Entleerungsstation gefördert wird, wo der Inhhalt des Beutels in einem Entleerungsbehälter aufgefangen und dann zu einem Aufbewahrungsbehälter gefördert wird, und wobei ein Beutel, für den die Information nicht erhalten worden ist, in Wartestellung gehalten wird, bis eine zweite Veterinär-Kontrolle durchgeführt worden ist.

15. Verfahren nach Anspruch 13, **dadurch gekennzeichnet, dass**, wenn die erste Veterinär-Kontrolle positiv ist oder ein Tier einen Defekt aufweist, eine Information eines hygienischen Risikos an die Abzweigstation übertragen wird, worauf ein Beutel, für den diese Information nicht empfangen worden ist; bis zu einer Entleerungsstation befördert wird, wo der Inhalt des Beutels in einem Entleerungsbehälter aufgefangen und dann zu einem Aufbewahrungsbehälter befördert wird, und wobei ein Beutel, für den diese Information empfangen worden ist, in Wartestellung gehalten wird, bis eine zweite Veterinär-Kontrolle durchgeführt worden ist.

16. Verfahren nach Anspruch 14 oder 15, **dadurch gekennzeichnet, dass**, wenn die zweite Veterinär-Kontrolle negativ ist, der in Wartestellung gehaltene Beutel in Bezug auf das Tier, welches endgültig für gesund erklärt worden ist, zu der Entleerungsstation gefördert wird, und dass im entgegengesetzten Fall der Blutbeutel ergriffen und zerstört wird.

17. Verfahren nach einem der Ansprüche 13 bis 16, **dadurch gekennzeichnet, dass** nach Beendigung der Blutabnahme die Bauchstecher aus den Tieren herausgezogen, zu einer Wasch- und Sterilisationsstation gefördert und dann zu einem neuen Gebrauch wieder eingesetzt werden.

18. Verfahren nach einem der Ansprüche 13 bis 17, **dadurch gekennzeichnet, dass** jedes Tier mittels eines Tier-Identifikations-Codes identifiziert wird, und dass jeder Beutel mittels eines Beutel-Identifikations-Codes identifiziert wird, wobei jeder Beutel-Identifikations-Code mit einem Tier-Identifikations-Code eines einzigen Tieres verbunden ist.
